(19) Europäisches Patentamt
European Patent Office
Office européen des brevets

(11) **EP 3 125 220 A1**

(12) **EUROPEAN PATENT APPLICATION**

(43) Date of publication:
**01.02.2017 Bulletin 2017/05**

(51) Int Cl.:
***G09B 23/30*** *(2006.01)*

(21) Application number: **16181648.3**

(22) Date of filing: **28.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.07.2015 JP 2015150558**

(71) Applicant: **Seiko Epson Corporation Tokyo 160-8801 (JP)**

(72) Inventors:
• **Sekino, Hirokazu**
  **Nagano, 392-8502 (JP)**
• **Seto, Takeshi**
  **Nagano, 392-8502 (JP)**
• **Ito, Jiro**
  **Nagano, 392-8502 (JP)**

(74) Representative: **Hoffmann Eitle Patent- und Rechtsanwälte PartmbB Arabellastraße 30 81925 München (DE)**

(54) **MODEL OF AN ORGAN**

(57)    A model of an organ includes first, second, and third models of blood vessels, a model of a parenchyma in which the first, second, and third models of blood vessels are embedded, and a case in which the model of a parenchyma is accommodated. In a case where the first, second, and third models of blood vessels are projected on a surface through which the model of a parenchyma is exposed from the case, each of the first and second models of blood vessels has an intersection point with the third model of a blood vessel inside a predetermined region.

FIG. 2

**Description**

BACKGROUND

1. Technical Field

The present invention relates to a model of an organ.

2. Related Art

A model is known in which a model of blood vessels are disposed inside a frame body and a model of muscle layers are arranged around the model of blood vessels so as to be filled with the model of muscle layers. This model is used for injection practice.

No consideration is given to issues that the above-described model is used for practice in excising a model of a parenchyma (model of a muscle layer) which simulates a parenchyma tissue surrounding a plurality of models of blood vessels, or that the above-described model is used in evaluating an excision device. Therefore, JP-UM-A-6-4768 does not disclose an arrangement of the plurality of models of blood vessels in detail.

SUMMARY

An advantage of some aspects of the invention is to properly arrange a plurality of models of blood vessels used for practice in excising a model of a parenchyma or used in evaluating performance of an excision device.

The invention can be implemented as the following aspects.

An aspect of the invention provides a model of an organ including first, second, and third models of blood vessels; a model of a parenchyma in which the first, second, and third models of blood vessels are embedded; and a case in which the model of a parenchyma is accommodated. In a case where the first, second, and third models of blood vessels are projected on a surface through which the model of a parenchyma is exposed from the case, each of the first and second models of blood vessels has an intersection point with the third model of a blood vessel inside one predetermined region. According to the aspect, the model of a blood vessel having two intersection points within a predetermined region can reproduce intersecting blood vessels or bifurcated blood vessels. In addition, excising practice using an excision device can be performed on a portion which simulates the intersecting blood vessels or the bifurcated blood vessels.

In the aspect, an angle between the first model of a blood vessel and the third model of a blood vessel and an angle between the second model of a blood vessel and the third model of a blood vessel may be respectively 45 degrees to 60 degrees. According to the aspect with this configuration, two intersection points easily become close to each other, and the two intersection points are easily arranged inside a predetermined region.

In the aspect, each of the first and second models of blood vessels may be in contact with the third model of a blood vessel at the intersection point. According to the aspect with this configuration, it becomes easy to reproduce bifurcated blood vessels.

In the aspect, a position where the third model of a blood vessel is fixed to the case may be lower than a contact position at the intersection point. According to the aspect with this configuration, each vertical position of the first, second, and third models of blood vessels is stabilized.

In the aspect, the model of a parenchyma may have a protruding portion from an upper end of the case; and the protruding portion may be removed before an excision device starts to excise the model of a parenchyma. According to the aspect with this configuration, it is possible to inhibit a mechanical property of a target portion of excision using an excision device from being changed due to long-term exposure.

The invention can be implemented in various forms in addition to the above-described configurations. For example, the invention can be implemented as a manufacturing method of the model of an organ.

BRIEF DESCRIPTION OF THE DRAWINGS

The invention will be described with reference to the accompanying drawings, wherein like numbers reference like elements.

Fig. 1 schematically illustrates a configuration of a liquid ejecting apparatus.
Fig. 2 is a top view of a model of an organ.
Fig. 3 is a sectional view of Fig. 2.
Fig. 4 is a flowchart illustrating a manufacturing procedure of the model of an organ.
Fig. 5 is a top view illustrating a state where a first accommodation member is inserted into a recess of a first member.
Fig. 6 is a sectional view of Fig. 5.
Fig. 7 is a top view illustrating a state where a model of a blood vessel is arranged.
Fig. 8 is a sectional view of Fig. 7.
Fig. 9 is a top view illustrating a state where a second accommodation member is inserted into a recess of a second member.
Fig. 10 is a sectional view of Fig. 9.
Fig. 11 is a top view illustrating a state where a model of a parenchyma is formed.
Fig. 12 is a sectional view of Fig. 11.
Fig. 13 is a top view illustrating a test region.
Fig. 14 is a perspective view for describing a pressing test.
Fig. 15 is a graph illustrating test data obtained by the pressing test.
Fig. 16 illustrates an excision portion.

Fig. 17 is a sectional view of Fig. 16.
Fig. 18 is a top view illustrating a model of an organ according to Modification Example 1.
Fig. 19 is a sectional view of Fig. 18.
Fig. 20 is a top view illustrating a model of an organ according to Modification Example 2.
Fig. 21 is a sectional view of Fig. 20.
Fig. 22 is a view for describing formation of the model of a parenchyma.
Fig. 23 is a sectional view of Fig. 22.

## DESCRIPTION OF EXEMPLARY EMBODIMENTS

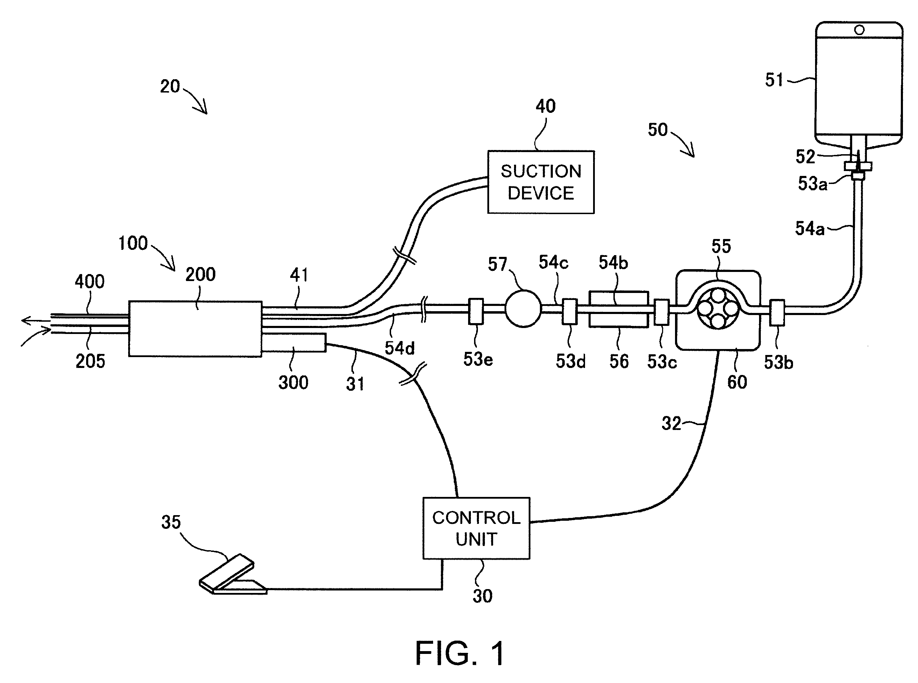

Fig. 1 schematically illustrates a configuration of a liquid ejecting apparatus 20. The liquid ejecting apparatus 20 is a medical device used in medical institutions, and is an excision device having a function to excise a lesion by ejecting a liquid to the lesion.

The liquid ejecting apparatus 20 includes a control unit 30, an actuator cable 31, a pump cable 32, a foot switch 35, a suction device 40, a suction tube 41, a liquid supply device 50, and a handpiece 100.

The liquid supply device 50 includes a water supply bag 51, a spike needle 52, first to fifth connectors 53a to 53e, first to fourth water supply tubes 54a to 54d, a pump tube 55, a clogging detection mechanism 56, and a filter 57. The handpiece 100 includes a nozzle unit 200 and an actuator unit 300. The nozzle unit 200 includes an ejecting tube 205 and a suction pipe 400.

The water supply bag 51 is made of a transparent synthetic resin, and the inside thereof is filled with a liquid (specifically, a physiological saline solution). In the present application, even if a bag is filled with liquids other than the water, the bag is called the water supply bag 51. The proximal portion of the spike needle 52 is connected to the first water supply tube 54a via the first connector 53a. If the distal end of the spike needle 52 is stuck into the water supply bag 51, the liquid filling the water supply bag 51 is in a state where the liquid can be supplied to the first water supply tube 54a.

The first water supply tube 54a is connected to the pump tube 55 via the second connector 53b. The pump tube 55 is connected to the second water supply tube 54b via the third connector 53c. A tube pump 60 pinches the pump tube 55. The tube pump 60 feeds the liquid inside the pump tube 55 to the second water supply tube 54b side from the first water supply tube 54a side.

The clogging detection mechanism 56 detects clogging inside the first to fourth water supply tubes 54a to 54d by measuring pressure inside the second water supply tube 54b.

The second water supply tube 54b is connected to the third water supply tube 54c via the fourth connector 53d. The filter 57 is connected to the third water supply tube 54c. The filter 57 collects foreign substances contained in the liquid.

The third water supply tube 54c is connected to the fourth water supply tube 54d via the fifth connector 53e. The fourth water supply tube 54d is connected to the nozzle unit 200. The liquid supplied through the fourth water supply tube 54d is intermittently ejected from a distal end of the ejecting tube 205 by driving the actuator unit 300. The liquid is intermittently ejected in this way. Accordingly, it is possible to ensure excision capability using a low flow rate.

The ejecting tube 205 and the suction pipe 400 configure a double tube in which the ejecting tube 205 serves as an inner tube and the suction pipe 400 serves as an outer tube. The suction tube 41 is connected to the nozzle unit 200. The suction device 40 performs suction on the inside of the suction pipe 400 through the suction tube 41. The suction is performed on the liquid or excised fragments in the vicinity of the distal end of the suction pipe 400.

The control unit 30 controls the tube pump 60 and the actuator unit 300. Specifically, while the foot switch 35 is stepped on, the control unit 30 transmits a drive signal via the actuator cable 31 and the pump cable 32. The drive signal transmitted via the actuator cable 31 drives a piezoelectric element (not illustrated) included in the actuator unit 300. The drive signal transmitted via the pump cable 32 drives the tube pump 60. Accordingly, while a user steps on the foot switch 35, the liquid is intermittently ejected. While the user does not step on the foot switch 35, the liquid ejection is stopped.

Hereinafter, a model of an organ will be described. The model of an organ is also called a phantom, and is an artificial product whose portion is excised by the liquid ejecting apparatus 20 in the present embodiment. The model of an organ according to the embodiment is used in performing a simulated operation for the purpose of a performance evaluation of the liquid ejecting apparatus 20, manipulation practice of the liquid ejecting apparatus 20, and the like.

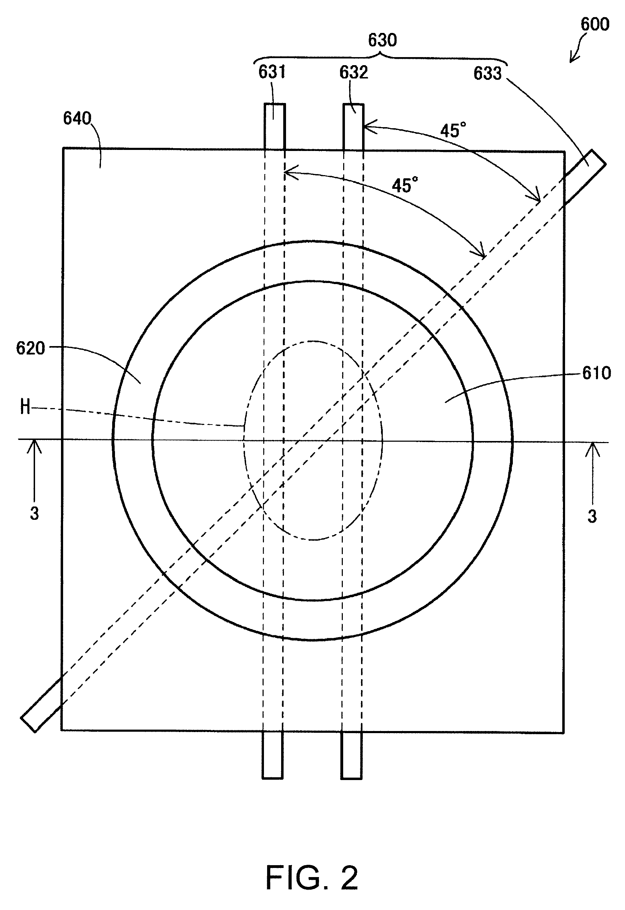

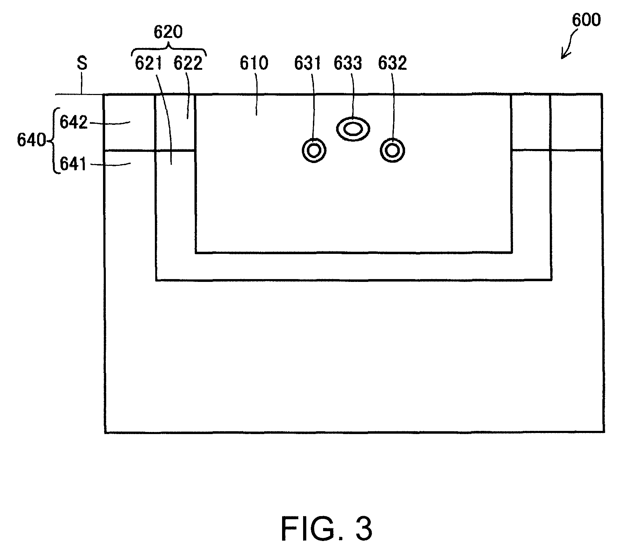

Fig. 2 is a top view of a model of an organ 600. Fig. 3 is a sectional view taken along line 3-3 illustrated in Fig. 2. The model of an organ 600 includes a model of a parenchyma 610, an accommodation member 620, a first model of a blood vessel 631, a second model of a blood vessel 632, a third model of a blood vessel 633, and a case 640. In some cases, the first model of a blood vessel 631, the second model of a blood vessel 632, and the third model of a blood vessel 633 may be collectively referred to as a model of a blood vessel 630.

The case 640 includes a first member 641 and a second member 642. The second member 642 is fixed onto the first member 641, thereby configuring the case 640. The reason that the case 640 is configured to have two members in this way is to facilitate manufacturing of the model of an organ 600 (details will be described later).

The first member 641 and the second member 642 have sufficient rigidity for supporting the accommodation member 620 and the model of a blood vessel 630. In order to have the above-described sufficient rigidity, the first member 641 and the second member 642 are formed of a material which has a sufficiently higher elastic modulus and breaking strength than those of the accommodation member 620.

The case 640 according to the embodiment is manufactured by using a transparent synthetic resin material. Since the case 640 is transparent, the accommodation member 620 is visible from a side surface of the case 640.

The accommodation member 620 is arranged inside a cylindrical recess formed in a central portion of the case 640. The accommodation member 620 is formed in such a way that a first accommodation member 621 and a second accommodation member 622 are stacked on each other. The accommodation member 620 is internally recessed so that the model of a parenchyma 610 can be held therein, and has a cylindrical shape in which only one side has a bottom. The accommodation member 620 is formed of a material which is softer than that of the case 640 and harder than that of the model of a parenchyma 610. The accommodation member 620 according to the embodiment is formed of a material whose breaking strength is five times more and whose elastic modulus is also five times more compared to those of the model of a parenchyma 610.

The model of a parenchyma 610 is an artificial living body model of a tissue which simulates a cerebral parenchyma. The model of a parenchyma 610 is arranged inside the cylindrical recess formed in the central portion of the accommodation member 620. The model of a parenchyma 610 is a target portion of excision using the liquid ejecting apparatus 20.

The model of a blood vessel 630 is an artificial tissue which simulates a cerebral blood vessel. The model of a blood vessel 630 is held by the case 640, and is embedded in the model of a parenchyma 610. Three in total, the first model of a blood vessel 631, the second model of a blood vessel 632, and the third model of a blood vessel 633 are arranged substantially horizontally.

The first model of a blood vessel 631 and the second model of a blood vessel 632 are arranged parallel to each other, and thus, have no intersection point with each other. A distance between the first model of a blood vessel 631 and the second model of a blood vessel 632 is set to be larger than the diameter of the suction pipe 400 so that the suction pipe 400 can be inserted therebetween. However, if the distance between the first model of a blood vessel 631 and the second model of a blood vessel 632 is too large, it is no longer possible to excise the model of a parenchyma 610 which is close to the three models of blood vessels 630. Accordingly, the above-described distance is set to approximately the same as or several times the diameter of the suction pipe 400.

The first model of a blood vessel 631 and the second model of a blood vessel 632 are respectively arranged so as to have an intersection point with respect to the third model of a blood vessel 633. The intersection point described herein means a portion where the first model of a blood vessel 631 and the second model of a blood vessel 632 respectively intersect the third model of a blood vessel 633 in a case where the model of a blood vessel 630 is projected on a surface S (Fig. 3). The surface S comes into contact with an upper end of the case 640. As illustrated in Fig. 3, a surface through which the model of a parenchyma 610 is exposed from the case 640 comes into contact with the surface S.

The intersection point between the first model of a blood vessel 631 and the third model of a blood vessel 633 and the intersection point between the second model of a blood vessel 632 and the third model of a blood vessel 633 are all positioned inside a predetermined region H as illustrated in Fig. 2, in a case where the model of a blood vessel 630 is projected on the surface S. The predetermined region H is positioned on the exposed surface of the model of a parenchyma 610, and is also determined by the shape of the case 640.

The predetermined region H is positioned in an upper portion of the peripheral portion of at least two models of blood vessels 630 of the three models of blood vessels 630. The peripheral portion means a portion which is positioned around the model of a blood vessels 630, and which can be an extracting target in a simulated operation. Therefore, in a case where the peripheral portion is excised, or in a case where a mechanical property of the model of a parenchyma 610 is measured in the predetermined region H, the model of a blood vessels 630 may be damaged.

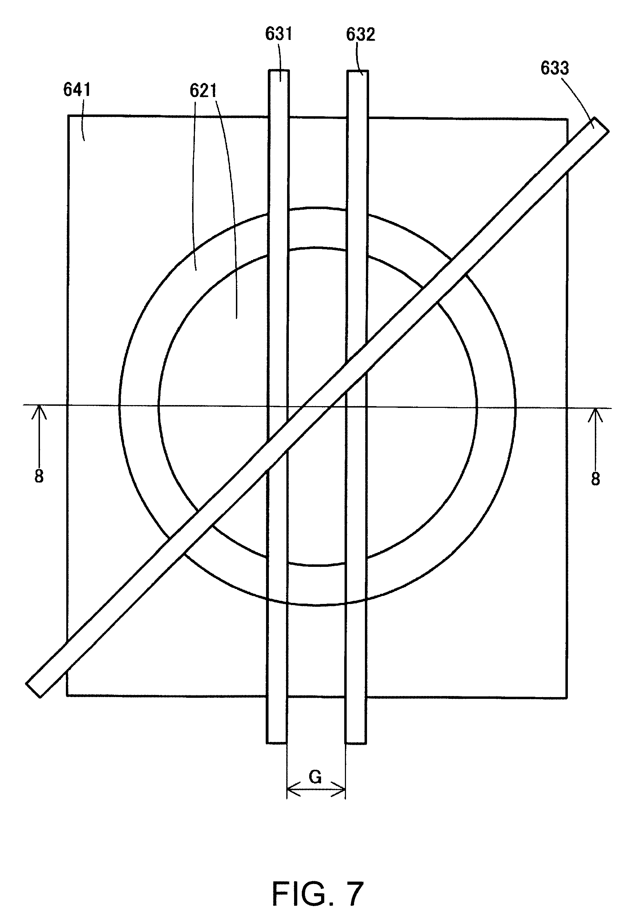

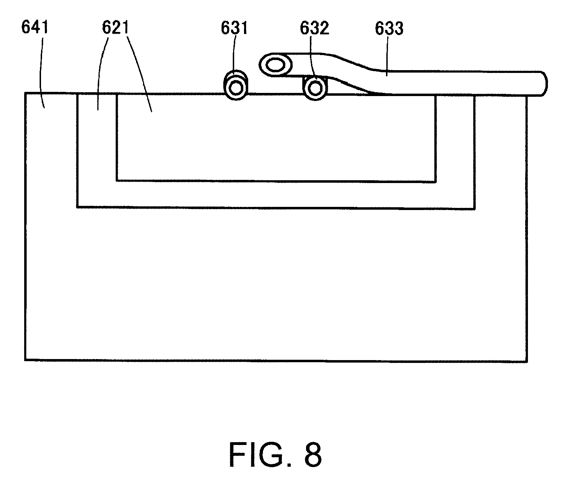

The first model of a blood vessel 631 and the second model of a blood vessel 632 are respectively located below the third model of a blood vessel 633 at the intersection point. The first model of a blood vessel 631 and the second model of a blood vessel 632 are respectively in contact with the third model of a blood vessel 633 at the intersection point (refer to Figs. 7 and 8).

The first model of a blood vessel 631 and the second model of a blood vessel 632 are respectively arranged so that an angle formed with the third model of a blood vessel 633 is 45 degrees. The angle is a value set in order to cause the two intersection points to be close to each other, and is also a value set in order to reproduce the bifurcated blood vessel.

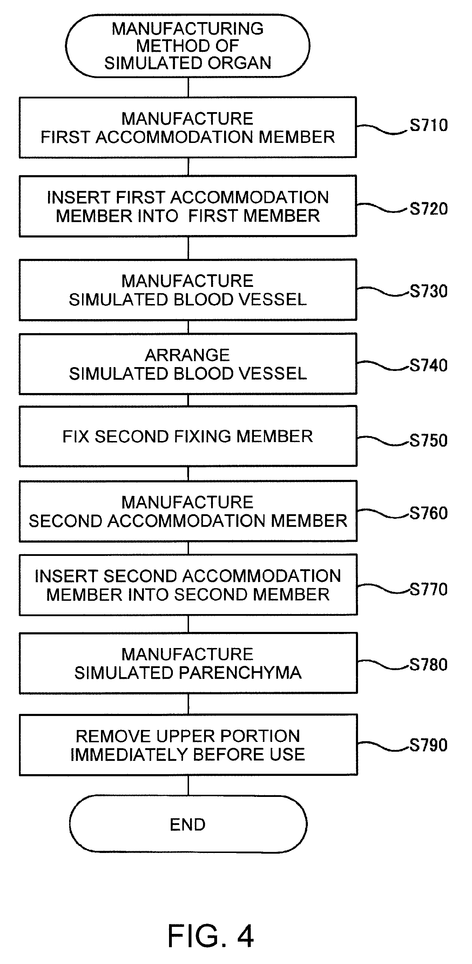

Fig. 4 is a flowchart illustrating a manufacturing procedure of the model of an organ 600. The first accommodation member 621 is manufactured at first (S710). Specifically, a mixture obtained by mixing and stirring a main agent of oil urethane and a curing agent is poured into a separately prepared die (not illustrated). Thereafter, the urethane is gelled and changed into elastomeric gel as the first accommodation member 621.

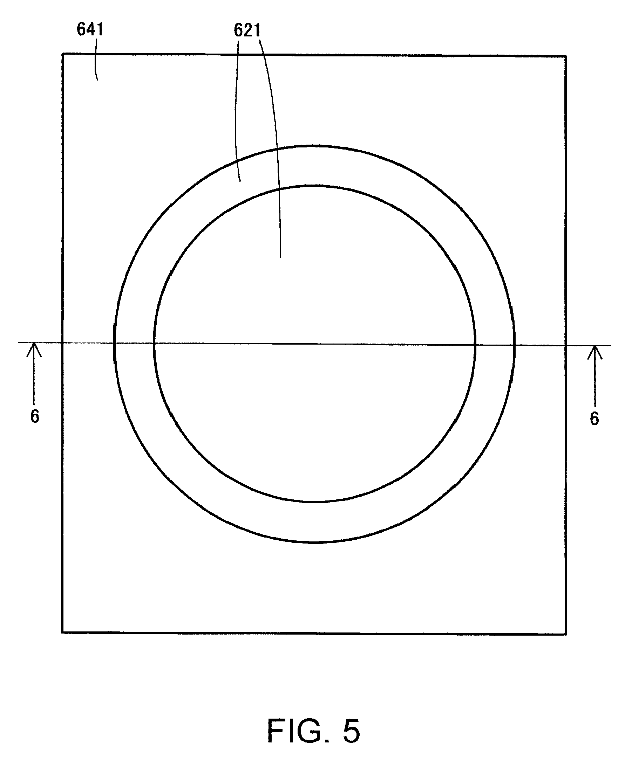

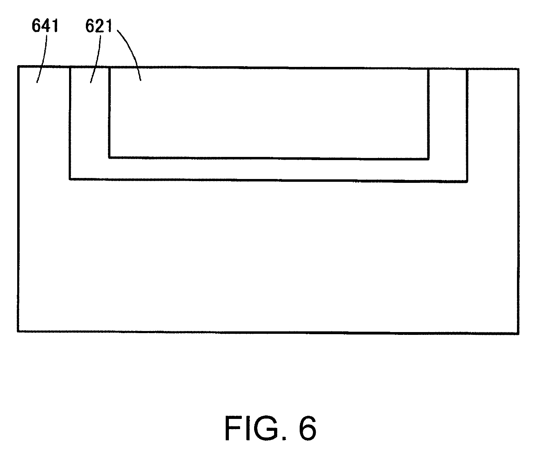

Next, as illustrated in Figs. 5 and 6, the first accommodation member 621 is inserted into the recess of the first member 641 (S720).

Next, the model of a blood vessel 630 is manufactured (S730). As a material for the model of a blood vessel 630, the embodiment employs polyvinyl alcohol (PVA). In a case of the embodiment, the model of a blood vessel 630 is a hollow member, and thus, the following manufacturing method can be employed. According to the method, an outer periphery of an extra fine wire is coated with the PVA prior to curing, and the extra fine wire is pulled out after the PVA is cured. The outer diameter of the extra fine wire is aligned with the inner diameter of the blood vessel. The extra fine wire is made of metal, and is formed of piano wire, for example.

Next, as illustrated in Figs. 7 and 8, the model of a blood vessel 630 is arranged (S740). Specifically, the first model of a blood vessel 631 and the second model of a blood vessel 632 are arranged at a predetermined position, and the third model of a blood vessel 633 is arranged at a predetermined position from above. The three models of blood vessels 630 are placed on a plane of the same height.

Next, the second member 642 is fixed to the first member 641 (S750). Specifically, the second member 642 is placed on the first member 641, and the models of blood vessels 630 are pinched by the first member 641 and the second member 642. In this state, the second member 642 is fixed to the first member 641 by using a screw (not illustrated). In this manner, the models of blood vessels 630 are fixed to the case 640.

Next, the second accommodation member 622 is manufactured (S760). The manufacturing method is the same as the manufacturing method (S710) of the first accommodation member 621. However, the second accommodation member 622 has a shape different from that of the first accommodation member 621. Accordingly, a die different from that in S710 is used.

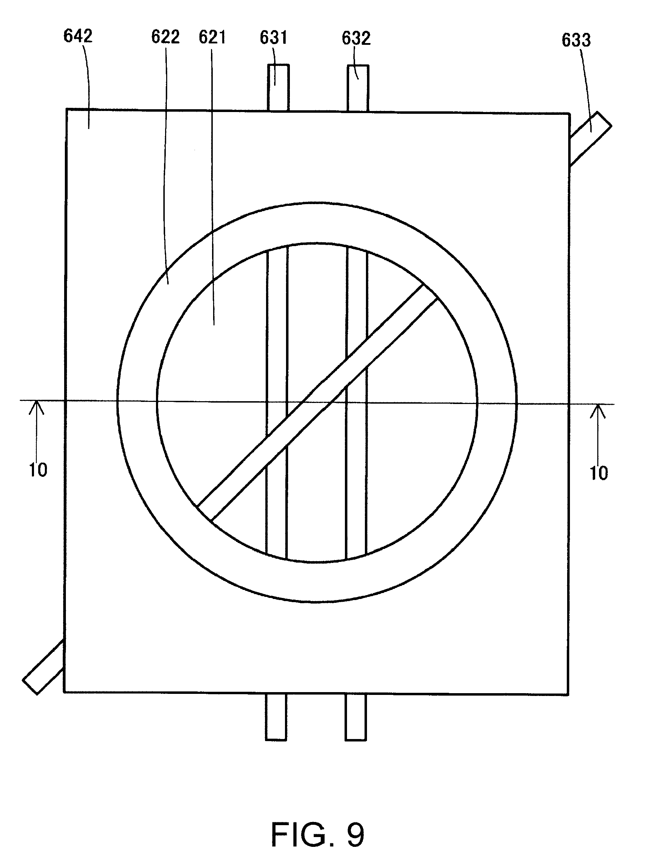

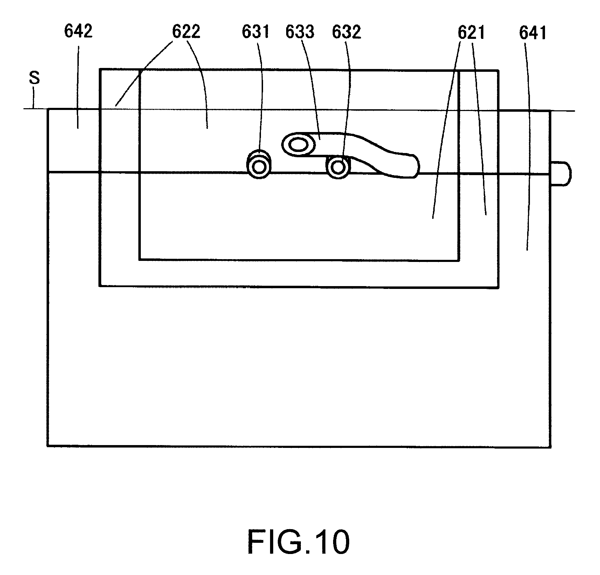

Next, as illustrated in Figs. 9 and 10, the second accommodation member 622 is inserted into a hole of the second member 642 (S770). Through S770, the model of a blood vessel 630 is pinched between the first accommodation member 621 and the second accommodation member 622. As illustrated in Fig. 10, the second accommodation member 622 protrudes higher compared to the surface S in S770. That is, the second accommodation member 622 is manufactured so as to be thicker than the height of the second member 642 in S760.

As illustrated in Figs. 9 and 10, a position where the third model of a blood vessel 633 is fixed to the case 640 is lower than the height at the intersection points with the first model of a blood vessel 631 and the second model of a blood vessel 632. Accordingly, the third model of a blood vessel 633 presses down each of the first model of a blood vessel 631 and the second model of a blood vessel 632 at the intersection point. This force inhibits the position of the first model of a blood vessel 631 and the second model of a blood vessel 632 from varying in the height direction in the vicinity of the intersection point.

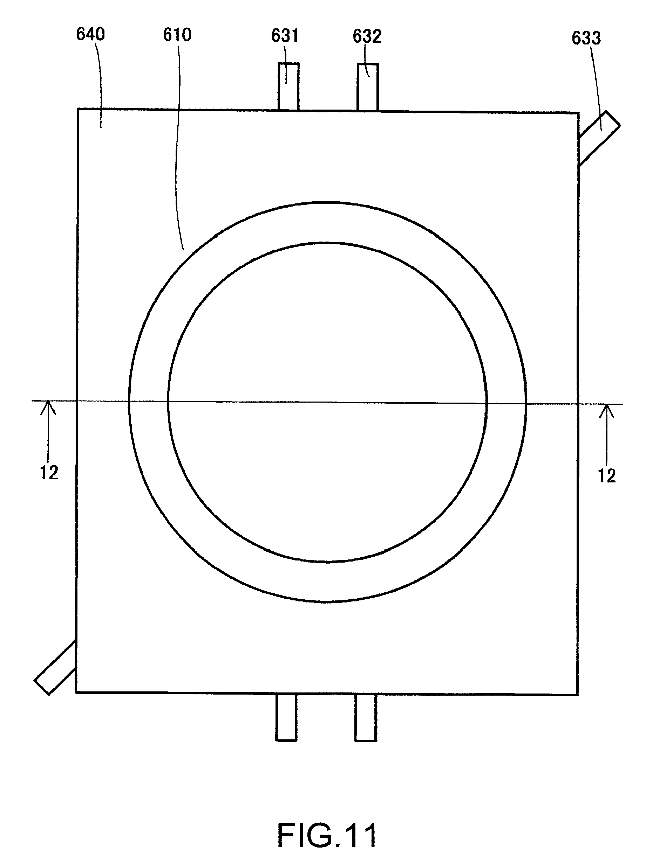

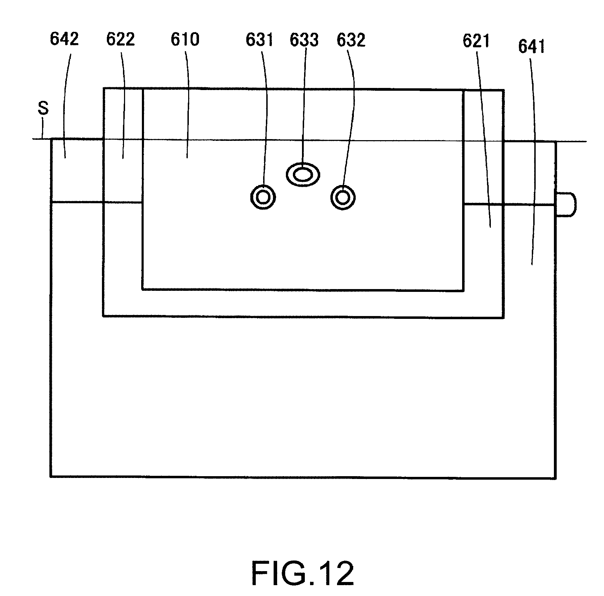

Next, as illustrated in Figs. 11 and 12, the model of a parenchyma 610 is manufactured (S780). Specifically, similarly to the manufacturing method of the accommodation member 620, the PVA material is poured into the recess formed by the accommodation member 620. Thereafter, the PVA material is subjected to a curing process such as freezing, and the PVA material is changed into the model of a parenchyma 610. The PVA material used in S780 is prepared so as to realize the mechanical property of the model of a parenchyma 610. As described previously, the mechanical property of the model of a parenchyma 610 shows that the breaking strength and the elastic modulus are one fifth of those of the accommodation member 620.

Immediately before the model of an organ 600 is used after S780 is completed, the upper portions of the model of a parenchyma 610 and the accommodation member 620 are removed along the surface S (S790). S790 is performed by using an excision device (scalpel or the like) other than the liquid ejecting apparatus 20. In this manner, the model of an organ 600 illustrated in Figs. 2 and 3 is completely manufactured. The model of an organ 600 is used when the liquid ejecting apparatus 20 excises the model of a parenchyma 610 or when the mechanical property is measured (to be described later).

The reason that S790 is performed immediately before using the model of an organ 600 is to excise the model of a parenchyma 610 or to measure the mechanical property for a new and fresh surface. If the model of a parenchyma 610 is exposed to air, the mechanical property is likely to vary. Accordingly, the mechanical property tends to be stabilized when in use by utilizing the upper portion of the accommodation member 620 as a lid.

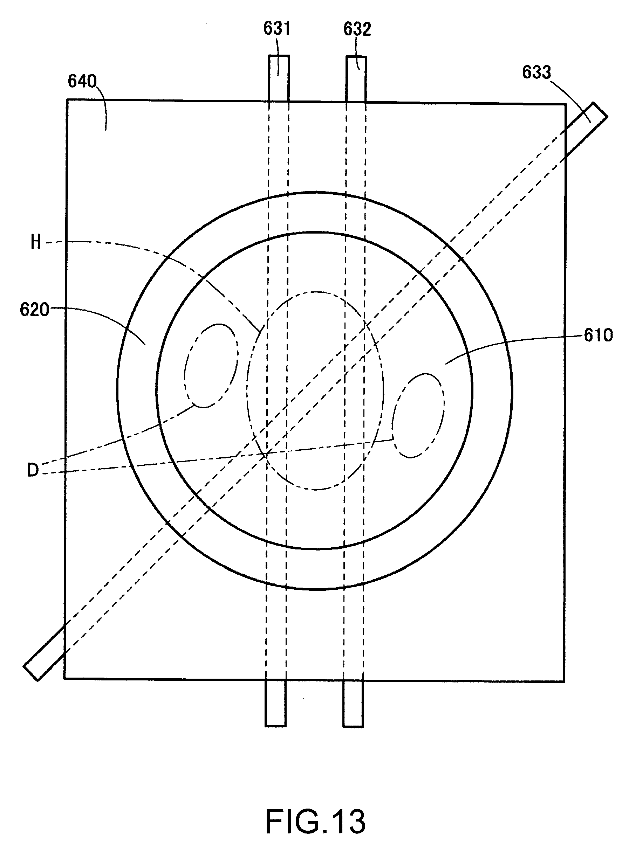

Herein, the measurement of the mechanical property of the model of a parenchyma 610 and the accommodation member 620 will be described. As illustrated in Fig. 13, the model of an organ 600 has a test region D prepared as a portion of a surface exposed from the case 640. The test region D is positioned in an upper portion of a portion separated from the model of a blood vessel 630. That is, in the test region D, even if excision is performed forwardly in the depth direction, the excision does not reach the vicinity of the model of a blood vessel 630. Accordingly, in the test region D, a pressing test of the model of a parenchyma 610 or a test of the liquid ejecting apparatus 20 can be performed while rarely receiving the influence on the model of a blood vessel 630. In the test of the liquid ejecting apparatus 20, it is tested whether the model of a parenchyma 610 can be normally excised by the liquid ejected from the liquid ejecting apparatus 20.

In the embodiment, a boundary line of the test region D is not actually illustrated. Accordingly, a user recognizes an approximate position of the test region D, based on the position of the model of a blood vessel 630 which is transparently visible through the model of a parenchyma 610. The test region D is positioned on the exposed surface of the model of a parenchyma 610, and is also determined by the shape of the case 640.

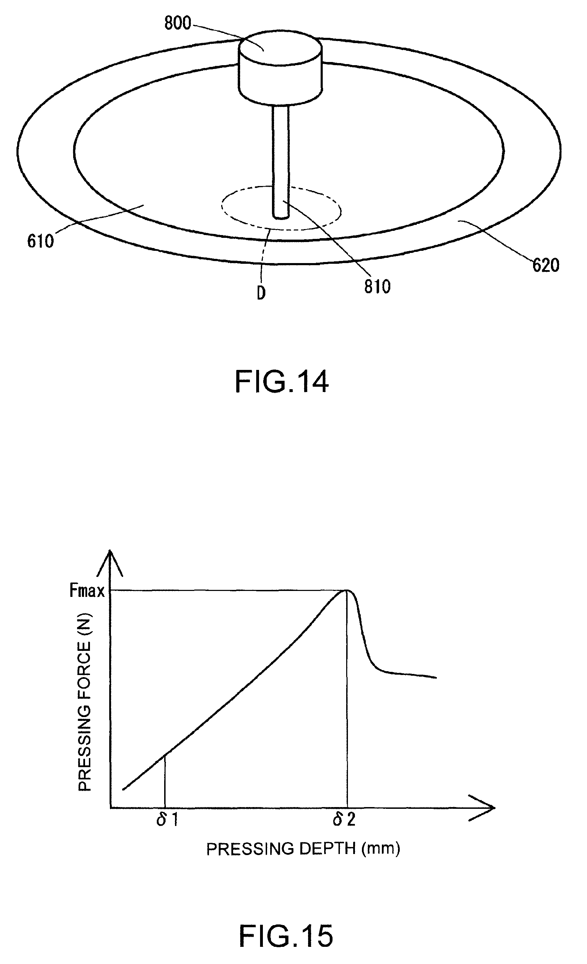

Fig. 14 is a perspective view for describing the pressing test. As illustrated in Fig. 14, a pin 800 is used for the pressing test. In the pressing test, a pressing force and a pressing depth are measured by using a load cell (not illustrated) on a real time basis. A radius of a pin tip 810 is 0.5 mm.

Fig. 15 is a view illustrating test data obtained by the above-described pressing test. The vertical axis represents the pressing force (N), and the horizontal axis represents the pressing depth (mm). Pressing speed of the pin 800 is 1 mm/sec when the breaking strength is measured, and is 0.1 mm/sec when the elastic modulus is measured.

As illustrated in Fig. 15, until the pressing depth reaches a depth $\delta2$, the pressing force also increases due to an increase in the pressing depth. An elastic modulus (MPa) of the model of a parenchyma 610 is calculated as a portion of a linear region, based on a data gradient in a region whose pressing depth reaches a depth $\delta1$ ($<\delta2$). The calculation employs Equation (1) below. Equation (1) is a Hertz Sneddon equation.

$$F=2R\{E/(1-v^2)\}\delta \quad (1)$$

In Equation (1), F represents the pressing force, R represents the radius of the pin tip, E represents the elastic modulus, $v$ represents a Poisson's ratio, and $\delta$ represents the pressing depth. It is preferable to set the depth $\delta1$ to a great value having such a degree that the value can be approximated if the data is linear. On the other hand, the Hertz Sneddon equation is effective in a case where the depth $\delta$ is sufficiently smaller than the radius R (=0.5 mm). Accordingly, it is preferable to set the depth $\delta1$ so as to be sufficiently smaller than the radius R. If Equation (1) is modified, Equation (2) is obtained as follows.

$$E=\{(1-v^2)/2R\}(F/\delta) \quad (2)$$

In Equation (2), $F/\delta$ represents the data gradient. The Poisson's ratio $v$ can employ 0.49 as an estimate value, based on the fact that the model of a parenchyma 610 is substantially incompressible. The radius R is known as described above. Accordingly, it is possible to calculate the elastic modulus E by measuring the data gradient.

As illustrated in Fig. 15, the pressing force peaks out at the depth $\delta2$. The reason that the pressing force peaks out is considered due to the fact that the model of a parenchyma 610 is broken. The pressing force when the pressing force peaks out is set to the maximum pressing force Fmax. The breaking strength P (MPa) is calculated by Equation (3) below.

$$P=Fmax/(\pi R^2) \quad (3)$$

Even when the model of a parenchyma 610 is broken as described above, if the test is performed in the test region D, the influence such as damage to the model of a blood vessel 630 is less likely to occur.

The elastic modulus and the breaking strength of the accommodation member 620 can be measured by using the same method. The measurement is performed on a target of the model of a parenchyma 610 and the accommodation member 620 in this way. With regard to the elastic modulus and the breaking strength, the measurement confirms that values of the accommodation member 620 are respectively 5 times values of the model of a parenchyma 610. Specifically, the elastic modulus of the model of a parenchyma 610 is 0.005 MPa, the breaking strength of the model of a parenchyma 610 is 0.026 MPa, and the values of the accommodation member 620 are approximately 5 times the values of the model of a parenchyma 610.

After the mechanical property is confirmed as described above, an excision test of the model of a parenchyma 610 is performed. The excision test is performed in order to evaluate performance of the liquid ejecting apparatus 20.

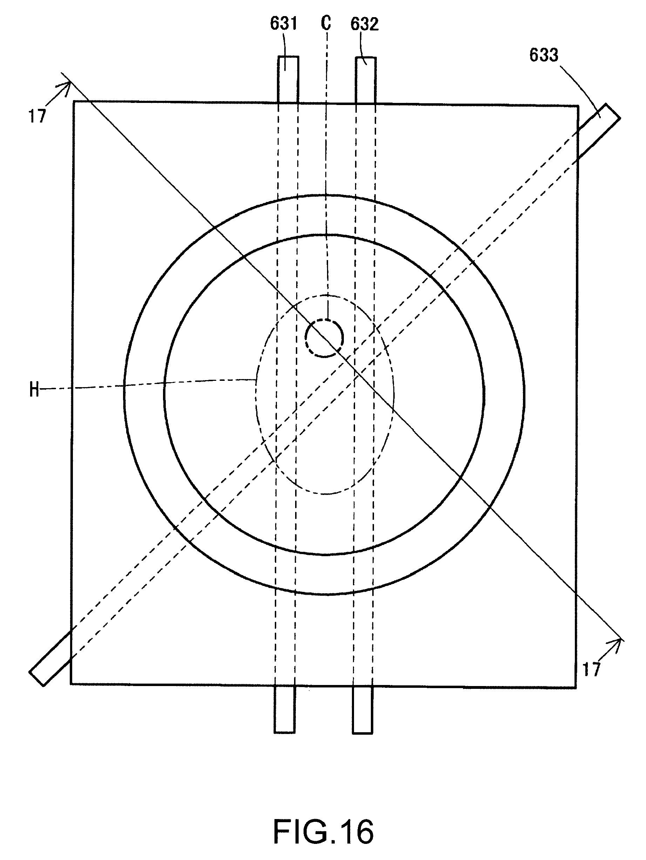

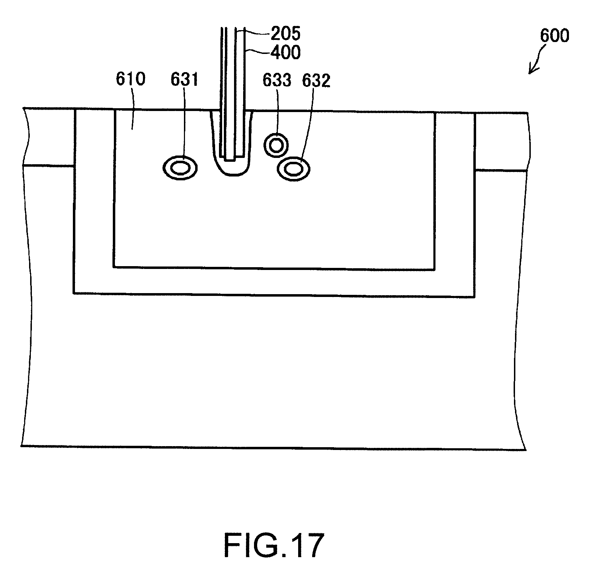

Fig. 16 illustrates an excision portion C. Fig. 17 is a sectional view taken along line 17-17 illustrated in Fig. 16, and illustrates a state where the model of a parenchyma 610 is excised. The excision portion C is included in the predetermined region H, and is selected as a portion in the vicinity of the intersection point between the first model of a blood vessel 631 and the third model of a blood vessel 633 and a portion in the vicinity of the intersection point between the second model of a blood vessel 632 and the third model of a blood vessel 633. In this way, simulated excision can be performed on a parenchyma in the vicinity of a portion where the blood vessels are densely gathered and bifurcated.

Furthermore, as described previously, the accommodation member 620 is arranged between the model of a parenchyma 610 and the case 640. In this manner, a sense of discomfort which a user of the liquid ejecting apparatus 20 remembers is relieved. In a case where the vicinity of an outer edge of the model of a parenchyma 610 is excised, the sense of discomfort results from a fact that the suction pipe 400 comes into contact with the case 640, or a fact that an excising state is suddenly changed due to the liquid ejected to the case 640.

In addition, as described previously, the accommodation member 620 has the breaking strength of five times that of the model of a parenchyma 610 so as not to be broken even when the liquid is ejected. It is preferable that the breaking strength of the accommodation member 620 is 2 times or greater than the breaking strength of the model of a parenchyma 610. The breaking strength may be greater than 5 times more (for example, 10 times).

On the other hand, in order to relieve the above-described sense of discomfort, the elastic modulus of the accommodation member 620 is minimized to 5 times the elastic modulus of the model of a parenchyma 610. It is preferable that the elastic modulus of the accommodation member 620 is 10 times or less than the elastic modulus of the model of a parenchyma 610, and may be the same as the elastic modulus of the model of a parenchyma 610.

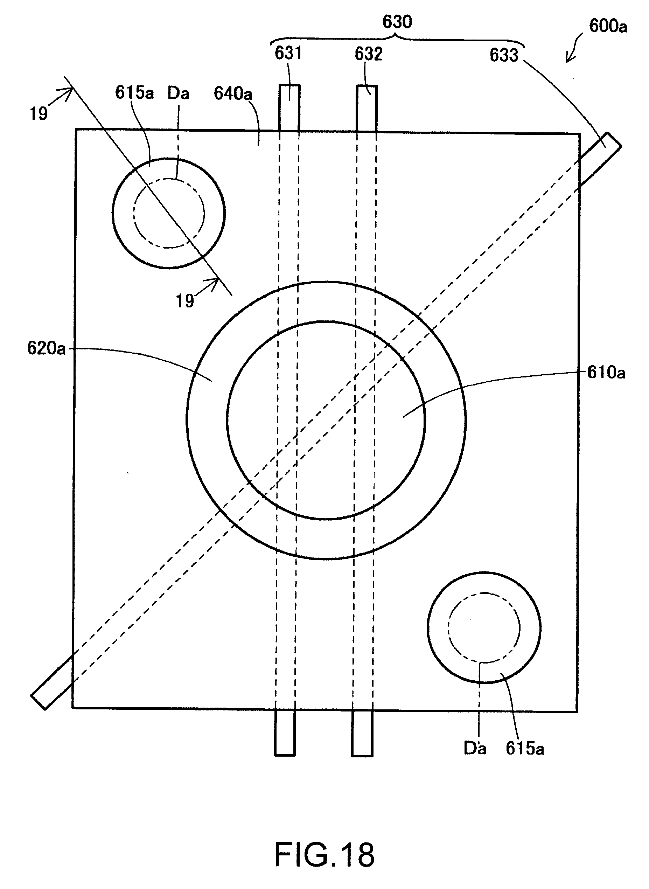

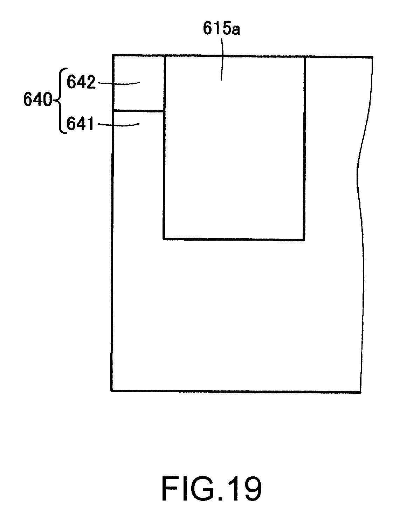

Fig. 18 is a top view illustrating a model of an organ 600a according to Modification Example 1. Fig. 19 is a sectional view taken along line 19-19 illustrated in Fig. 18. The model of an organ 600a includes a model of a parenchyma 610a, two models of parenchymas for test 615a, an accommodation member 620a, the model of a blood vessel 630, and a case 640a. The model of a blood vessel 630 is the same as that according to the embodiment.

The model of a parenchyma 610a and the accommodation member 620a are the same as those according to the embodiment except that areas when viewed from above are different from each other. A region of the model of a parenchyma for test 615a is formed of the same material as that of the model of a parenchyma 610a. The region of the model of a parenchyma for test 615a is separated from a region of the model of a parenchyma 610a. Therefore, a user can clearly identify the model of a parenchyma for test 615a as a region which does not affect the model of a blood vessel 630 even when the mechanical property is measured.

The user can identify the central portion of the model of a parenchyma for test 615a as a test region Da. In the test region Da, the pressing test can be performed while rarely receiving the influence from the case 640a.

Furthermore, as described above, the model of a parenchyma for test 615a is separated from the model of a parenchyma 610a. Accordingly, the model of a parenchyma 610a is not influenced, even when the remaining model of a parenchyma for test 615a is peeled from the case 640a by excising a portion of the model of a parenchyma for test 615a. For example, the influence on the model of a parenchyma 610a means that the model of a parenchyma 615a is peeled off together with the case 640a.

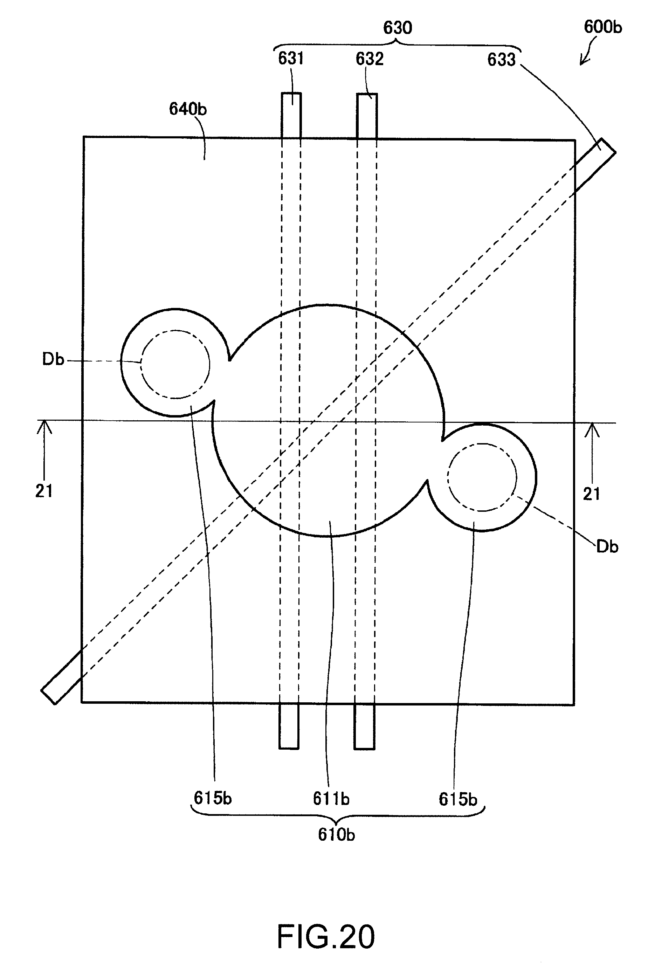

Fig. 20 is a top view illustrating a model of an organ 600b according to Modification Example 2. The model of an organ 600b includes a model of a parenchyma 610b, the model of a blood vessel 630, and a case 640b. The model of a blood vessel 630 is the same as that according to the embodiment.

The model of a parenchyma 610b includes a simulant for excision 611b and two simulants for test 615b. Each of the two simulants for test 615b is a region continuous with the simulant for excision 611b and protruding from the simulant for excision 611b in a direction along the surface S.

In Modification Example 2, a boundary is not illustrated between the simulant for excision 611b and the simulant for test 615b. However, an approximate boundary can be recognized between the simulant for excision 611b and the simulant for test 615b. The reason is that an outline of the simulant for excision 611b can be identified as a closed curve by imaging a virtual line which extends along the outline of the simulant for excision 611b. In order to easily image the above-described virtual line, the outline of the simulant for excision 611b is defined by two arcs belonging to the same circle.

Furthermore, the outline of the simulant for test 615b can also be identified as the closed curve, since the outline is defined by the arc. Therefore, the approximate boundary can be easily recognized between the simulant for excision 611b and the simulant for test 615b. In addition, a central portion of the simulant for test 615b can be identified as a test region Db. In the test region Db, the pressing test can be performed while rarely receiving the influence from the case 640b.

In addition, as described above, the simulant for excision 611b and the simulant for test 615b are defined by the arc serving as a portion of different circles. Accordingly, even if the simulant for test 615b is partially or entirely excised, the simulant for excision 611b is less likely to be peeled off from the case 640b.

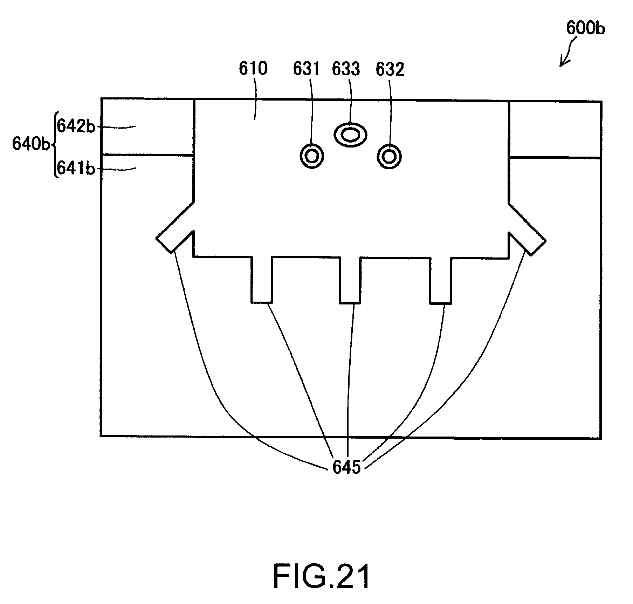

Fig. 21 is a sectional view taken along line 21-21 illustrated in Fig. 20. As illustrated in Fig. 21, a first member 641b includes a plurality of recesses 645. The recesses 645 are disposed on a bottom surface and a side surface of the first member 641b.

The model of a parenchyma 610b is formed inside the recess 645. The model of a parenchyma 610b formed inside the recess 645 functions as a pile, thereby preventing the model of a parenchyma 610b from being peeled off from the case 640b.

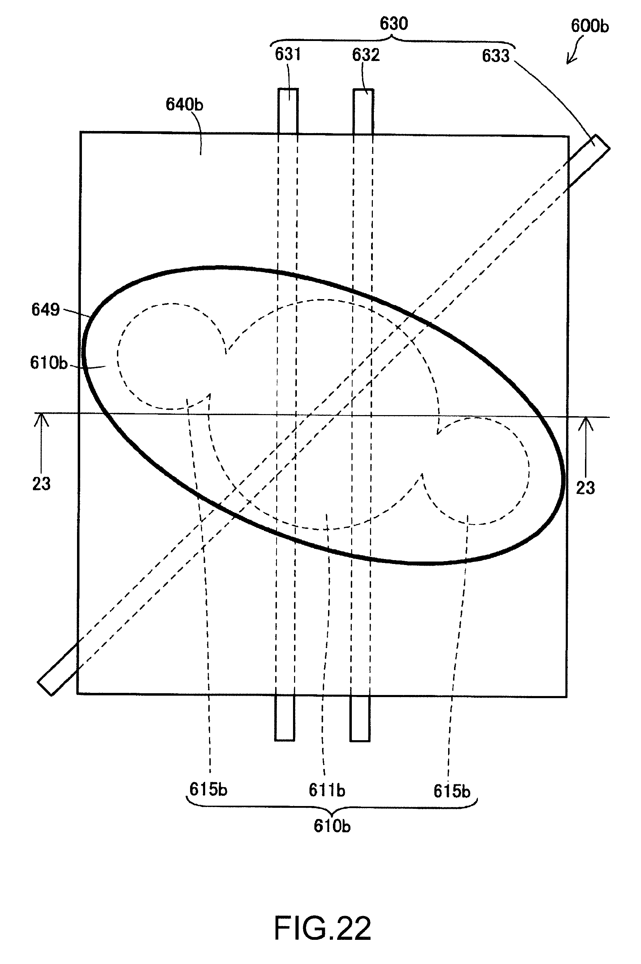

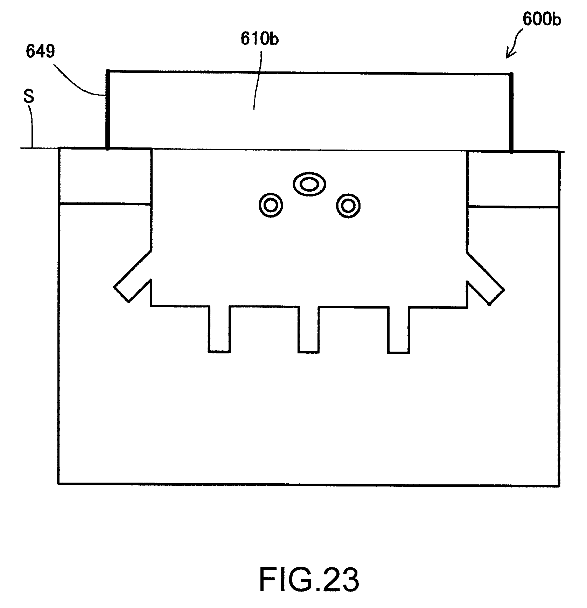

Fig. 22 is a view for describing formation of the model of a parenchyma 610b. Fig. 23 is a sectional view taken along line 23-23 illustrated in Fig. 22. The model of an organ 600b does not have the accommodation member. Accordingly, a raw material of the model of a parenchyma 610b is poured into the recess disposed in the case 640b. Therefore, a mold 649 is used in order to dispose a portion protruding further from the surface S.

As illustrated in Fig. 22, the mold 649 is arranged so as to be covered by the simulant for excision 611b and the simulant for test 615b. The mold 649 is formed of a film-like member so as to be easily detached from the stiffened model of a parenchyma 610b.

Without being limited to the embodiment, the example, and the modification example which are described herein, the invention can be realized according to various configurations within the scope not departing from the gist of the invention. For example, technical features in the embodiment, the example, and the modification example which correspond to technical features according to each aspect described in the summary of the invention can be appropriately replaced or combined with each other in order to partially or entirely solve the previously described problem or in order to partially or entirely achieve the previously described advantageous effects. If any one of the technical features is not described herein as essential, the technical feature can be appropriately omitted. For example, the following configurations can be adopted as an alternative.

An angle between the first model of a blood vessel and the third model of a blood vessel may be 45 degrees to 60 degrees.

An angle between the second model of a blood vessel and the third model of a blood vessel may be 45 degrees to 60 degrees, and may be different from the angle between the first model of a blood vessel and the third model of a blood vessel.

The first model of a blood vessel and the second model of a blood vessel may not be parallel to each other, and may further have the intersection point.

In the embodiment or Modification Example 1, the accommodation member may not be disposed.

The test region may be clearly indicated. Specifically, a boundary may be drawn by using a pen or the like.

The accommodation member may accommodate the model of a parenchyma for test according to Modification Example 1.

A material of the model of a parenchyma or the accommodation member may be changed. For example, aqueous urethane may be used.

A material of the case may be metal (iron, aluminum), a non-transparent resin, or the like.

The model of a blood vessel may be a solid member.

The number of models of blood vessels may be one, two, four or more. That is, a configuration may be adopted in which at least one model of a blood vessel is embedded in the model of a parenchyma.

A simulation target of the model of an organ may not be the brain, and may be the liver, for example.

According to the embodiment, the second member 642 is fixed onto the first member 641, thereby configuring the case 640, but a configuration is not limited thereto. A configuration may be adopted as long as the first member 641 and the second member 642 are not erroneously moved relative to each other. A configuration may also be adopted in which two members are connected by using a friction force generated by the contact therebetween or in which the two members are attachable and detachable.

According to the embodiment, a configuration is adopted in which the model of a blood vessel 630 penetrates the model of a parenchyma 610, the accommodation member 620, and the case 640 so as to be embedded in the model of a parenchyma 610. However, a configuration is not limited thereto. The model of a blood vessel 630 may be configured to penetrate at least one of the model of a parenchyma 610, the accommodation member 620, and the case 640. Alternatively, the model of a blood vessel 630 may be configured not to penetrate any member. At least a portion of the model of a blood vessel 630 may be configured to be embedded in the model of a parenchyma. In addition, a configuration is adopted in which the model of a blood vessel is fixed to the case 64 0, but a configuration is not limited thereto. A configuration may also be adopted in which the model of a blood vessel is less likely to move by adhering to the model of a parenchyma without being fixed to the case 640.

**Claims**

1. A model of an organ comprising:

   first, second, and third models of blood vessels;
   a model of a parenchyma in which the first, second, and third models of blood vessels are embedded; and
   a case in which the model of a parenchyma is accommodated,

   wherein in a case where the first, second, and third models of blood vessels are projected on a surface through which the model of a parenchyma is exposed from the case, each of the first and second models of blood vessels has an intersection point with the third model of a blood vessel inside one predetermined region.

2. The model of an organ according to claim 1, wherein an angle between the first model of a blood vessel and the third model of a blood vessel and an angle between the second model of a blood vessel and the third model of a blood vessel are respectively 45 degrees to 60 degrees.

3. The model of an organ according to claim 1 or 2, wherein each of the first and second models of blood vessels is in contact with the third model of a blood vessel at the intersection point.

4. The model of an organ according to claim 3, wherein a position where the third model of a blood vessel is fixed to the case is lower than a contact position at the intersection point.

5. The model of an organ according to one of claims 1 to 4,
   wherein the model of a parenchyma has a protruding portion from an upper end of the case, and
   wherein the protruding portion is removed before an excision device starts to excise the model of a parenchyma.

FIG. 1

FIG. 2

FIG. 3

```
┌─────────────────────────┐
│   MANUFACTURING         │
│   METHOD OF             │
│   SIMULATED ORGAN       │
└─────────────────────────┘
            │
┌─────────────────────────┐
│      MANUFACTURE        │──── S710
│ FIRST ACCOMMODATION MEMBER │
└─────────────────────────┘
            │
┌─────────────────────────┐
│ INSERT FIRST ACCOMMODATION │──── S720
│ MEMBER INTO  FIRST MEMBER │
└─────────────────────────┘
            │
┌─────────────────────────┐
│      MANUFACTURE        │──── S730
│ SIMULATED BLOOD VESSEL  │
└─────────────────────────┘
            │
┌─────────────────────────┐
│       ARRANGE           │──── S740
│ SIMULATED BLOOD VESSEL  │
└─────────────────────────┘
            │
┌─────────────────────────┐
│  FIX SECOND FIXING MEMBER │──── S750
└─────────────────────────┘
            │
┌─────────────────────────┐
│      MANUFACTURE        │──── S760
│ SECOND ACCOMMODATION MEMBER │
└─────────────────────────┘
            │
┌─────────────────────────┐
│ INSERT SECOND ACCOMMODATION │──── S770
│ MEMBER INTO SECOND MEMBER │
└─────────────────────────┘
            │
┌─────────────────────────┐
│      MANUFACTURE        │──── S780
│ SIMULATED PARENCHYMA    │
└─────────────────────────┘
            │
┌─────────────────────────┐
│ REMOVE UPPER PORTION    │──── S790
│ IMMEDIATELY BEFORE USE  │
└─────────────────────────┘
            │
┌─────────────────────────┐
│          END            │
└─────────────────────────┘
```

FIG. 4

641    621

6                                    6

FIG. 5

641  621

FIG. 6

631  632

633

641  621

8

8

G

FIG. 7

FIG. 8

FIG. 9

FIG.10

FIG.11

FIG.12

FIG.13

**FIG.14**

**FIG.15**

FIG.16

FIG.17

FIG.18

615a

640 { 642

641

FIG.19

FIG.20

600b

610  631  633  632

642b
640b
641b

645

FIG.21

FIG.22

FIG.23

Europäisches
Patentamt

European
Patent Office

Office européen
des brevets

# EUROPEAN SEARCH REPORT

Application Number

EP 16 18 1648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/205101 A1 (GOOGLE INC [US]) 24 December 2014 (2014-12-24) * paragraphs [0039] - [0045]; figures 1,6B,11 * | 1-5 | INV. G09B23/30 |
| A | JP 2010 243867 A (FUSO RUBBER KOGYO KK) 28 October 2010 (2010-10-28) * the whole document * | 1-5 | |
| A | US 2012/034587 A1 (TOLY CHRISTOPHER C [US]) 9 February 2012 (2012-02-09) * the whole document * | 1-5 | |
| A | US 2006/184005 A1 (SAKEZLES CHRISTOPHER [US]) 17 August 2006 (2006-08-17) * the whole document * | 1-5 | |

TECHNICAL FIELDS
SEARCHED (IPC)

G09B

The present search report has been drawn up for all claims

| Place of search | Date of completion of the search | Examiner |
|---|---|---|
| Munich | 9 December 2016 | Kirchler, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 16 18 1648

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2016

| Patent document cited in search report | | Publication date | Patent family member(s) | | Publication date |
|---|---|---|---|---|---|
| WO 2014205101 | A1 | 24-12-2014 | US 2014377731 A1<br>WO 2014205101 A1 | | 25-12-2014<br>24-12-2014 |
| JP 2010243867 | A | 28-10-2010 | JP 5390241 B2<br>JP 2010243867 A | | 15-01-2014<br>28-10-2010 |
| US 2012034587 | A1 | 09-02-2012 | NONE | | |
| US 2006184005 | A1 | 17-08-2006 | US 2006184005 A1<br>US 2009075244 A1 | | 17-08-2006<br>19-03-2009 |

EPO FORM P0459

For more details about this annex : see Official Journal of the European Patent Office, No. 12/82